# EUROPÄISCHE PATENTANMELDUNG

(11) **EP 2 172 669 A1**
(43) Veröffentlichungstag der Anmeldung: **07.04.2010**
(21) Anmeldenummer: 08017479.0
(22) Anmeldetag: 06.10.2008
(51) Int. Cl.: F16F 9/56, F16F 15/02

(54) **Tragvorrichtung und selbstzentrierender Schockdämfer für eine derartige Tragvorrichtung**

(71) Anmelder: Stop-Choc Schwingungstechnik GmbH & Co. KG, 71272 Renningen (DE)
(72) Erfinder: Die Erfindernennung liegt noch nicht vor
(74) Vertreter: Schmid, Rudolf

(57) **Zusammenfassung**

Die Erfindung betrifft eine Tragvorrichtung (1) mit mindestens einer Stütze aus einem elastischen Element (8, 9, 10, 11) mit Dämpfungseigenschaften und mindestens einem metallischen Sockel (3, 4, 5, 6) für eine nach einem von einer Verankerung (7) über die Stütze übertragenen Schock reversibel in ihre Ausgangslage rückführbaren Platte (2). Das mindestens eine elastische Element (8, 9, 10, 11) mit Dämpfungseigenschaften ist zwischen dem mindestens einen Sockel (3, 4, 5, 6) und der Platte (2) angeordnet und mindestens ein selbstzentrierender Schockdämpfer ist parallel zu der mindestens einen Stütze geschaltet.

## Beschreibung

Die Erfindung betrifft eine Tragvorrichtung mit mindestens einer Stütze für eine Platte, die nach einem über die Stütze übertragenen Schock reversibel in ihre Ausgangslage rückführbar ist und selbstzentrierende Schockdämpfer für eine derartige Tragvorrichtung.

Beobachtungseinrichtungen, wie z. B. ein Schiffsradar, werden für gute Signalverarbeitung mittels einer Tragvorrichtung bevorzugt in exponierter Lage mit einer bestimmten Ausrichtung positioniert, die stabil erhalten bleiben soll, auch nach Schockeinwirkungen auf die Tragvorrichtung. Problematisch für die stabile Ausrichtung ist es, dass die Beobachtungseinrichtungen hohe Massen haben deren Trägheit bei Schocks von außen zu hohen Kräften und auch wegen deren exponierter Lage zu hohen Momenten in der Tragvorrichtung und damit zu Auslenkungen führen, die ein Rückführen der Beobachtungseinrichtungen in die Ausgangslage mit der bestimmten Ausrichtung zumindest erschweren.

Bekannt sind Beobachtungseinrichtungen auf Schiffen, deren Tragvorrichtungen nach einem Schock, wie z. B. einer Minenexplosion, zumindest teilerneuert werden müssen für weitere stabile Ausrichtung der Beobachtungseinrichtungen.

Aufgabe der Erfindung ist es, eine Tragvorrichtung zu schaffen, die nach einem Schock ohne äußere Eingriffe in ihre Ausgangslage rückführbar ist.

Die Lösung erfolgt mit einer Tragvorrichtung mit den Merkmalen des Anspruchs 1 und einem selbstzentrierenden Schockdämpfer mit den Merkmalen des Anspruchs 7. Vorteilhafte Ausgestaltungen der Erfindung sind in den Unteransprüchen dargestellt.

Gemäß der Erfindung weist eine Tragvorrichtung mindestens eine Stütze mit mindestens einem elastischen Element mit Dämpfungseigenschaften und einem metallischen Sockel auf für eine nach einem von einer Verankerung über die Stütze übertragenen Schock reversibel in ihre Ausgangslage rückführbaren Platte, wobei das mindestens eine elastische Element mit Dämpfungseigenschaften zwischen dem mindestens einen Sockel und der Platte angeordnet ist. Mindestens ein selbstzentrierender Schockdämpfer ist parallel zu der mindestens einen Stütze zwischen Verankerung und Platte geschaltet, indem der mindestens eine selbstzentrierende Schockdämpfer insbesondere einerseits an der Verankerung und andererseits an der Platte befestigt ist. Einer der Vorteile der Erfindung liegt zunächst darin, dass das elastische Element zwischen der mindestens einen Stütze und der Platte es ermöglicht, dass die Platte mit einer darauf befestigten schweren Masse, wie z. B. einem Radarschirm, zunächst zurück bleiben kann relativ zu Ausweichbewegungen der Verankerung mit der mindestens einen Stütze auf einen schweren Schock, wie er z. B. durch eine Minenexplosion auf einen Schiffsrumpf, auf dem die erfindungsgemäße Tragvorrichtung montiert ist, ausgelöst werden kann, so dass die Summe der Trägheitskräfte von Masse und Platte auf die mindestens eine Stütze und die Biegemomente an der mindestens einen Stütze und deren Verankerung reduziert sind, wobei durch das elastische Element zugelassene Schwingungen von Masse und Platte relativ zu den Stützen mit den Dämpfungseigenschaften des elastischen Elements auf Null zurück geführt werden. Ein weiterer Vorteil der Erfindung liegt darin, dass der mindestens eine selbstzentrierende Schockdämpfer, der parallel zu der mindestens einen Stütze zwischen Verankerung und Platte geschaltet ist, einen Teil der Trägheitskräfte von Masse und Platte aus einem Schock übernimmt und so dazu beiträgt, dass die Summe der Trägheitskräfte von Masse und Platte auf die Stützen und die Biegemomente an der mindestens einen Stütze und der Verankerung reduziert sind. Noch ein wieterer Vorteil der Erfindung liegt darin, dass der mindestens eine selbstzentrierende Schockdämpfer die ausgelenkte Platte präzise in ihre Ausgangslage zurückführt nachdem das mindestens eine elastische Element mit Dämpfungseigenschaften zunächst größere Auslenkungen von Masse und Platte relativ zu den Stützen reduziert hat, so dass gemäß der Erfindung nicht nur insgesamt reduzierte Trägheitskräfte aus Masse und Platte zwischen dem mindestens einen selbstzentrierenden Schockdämpfer und der mindestens einen Stütze zu jeweils geringeren Kräften und Momenten aufgeteilt werden, sondern auch die Rückführung von Masse und Platte in die Ausgangslage relativ zur mindestens einen Stütze für größere Auslenkungen zunächst von dem mindestens einen elastischen Element mit Dämpfungseigenschaften und für kleinere Auslenkungen von dem mindestens einen selbstzentrierenden Schockdämpfer zusammen mit dem mindestens einen elastischen Element erreicht werden.

Gemäß einer bevorzugten Ausgestaltung der Erfindung sind die mindestens eine Stütze im wesentlichen vertikal und die Platte im wesentlichen horizontal ausgerichtet.

Gemäß einer weiteren bevorzugten Ausgestaltung der Erfindung ist die Platte im wesentlichen rechteckig und jeweils eine von vier Stützen ist an den Ecken der Platte angeordnet.

Gemäß einer weiteren bevorzugten Ausgestaltung der Erfindung hat das elastische Element zwischen Stütze und Platte einen im wesentlichen Z-förmigen Querschnitt und ist mit seinen sich parallel gegenüberliegenden Außenflächen jeweils mit Stütze und Platte verbunden.

Gemäß einer weiteren bevorzugten Ausgestaltung der Erfindung ist mindestens je ein selbstzentrierender Schockdämpfer für jede der Raumachsen x, y, z vorgesehen, wobei die zur Ebene der Platte parallelen, selbstzentrierenden Schockdämpfer im wesentlichen parallel zu den Seiten der Platte angeordnet und über Winkel einerseits an die Platte und andererseits an die Verankerung angelenkt sind.

Gemäß einer weiteren bevorzugten Ausgestaltung der Erfindung sind jeweils zwei selbstzentrierende Schockdämpfer für jede der Raumachsen x, y, z vorgesehen, wobei die selbstzentrierenden Schockdämpfer für jede der Raumachsen x, y, z im wesentlichen symmetrisch in der Tragvorrichtung angeordnet sind.

Gemäß einer bevorzugten Ausgestaltung der Erfindung ist ein einerseits an der Verankerung oder der Stütze und andererseits an der Platte der Tragvorrichtung gehaltener selbstzentrierender Schockdämpfer vorgesehen mit einem in einem Zylinder verschieblich geführten Kolben, einer von mindestens einer Feder vorgespannten Rolle, die senkrecht zum Zylinder geführt ist und einer Nut in dem Kolben zur Aufnahme der senkrecht zum Zylinder geführten Rolle.

Gemäß einer weiteren bevorzugten Ausgestaltung der Erfindung ist der selbstzentrierende Schockdämpfer an seinen axialen Enden jeweils mit einem Flansch zur gelenkigen Befestigung einerseits an der Platte und andererseits an der Verankerung, auf der die Stütze steht, versehen.

Die Erfindung wird im Folgenden anhand eines bevorzugten Ausführungsbeispiels dargestellt. Es zeigen:
Fig. 1: eine perspektivische Darstellung einer Tragvorrichtung gemäß der Erfindung,
Fig. 2: eine Ansicht von links einer Tragvorrichtung gemäß der Erfindung,
Fig. 3: eine perspektivische Darstellung eines selbstzentrierenden Schockdämpfers gemäß der Erfindung,
Fig. 4: einen Querschnitt entlang einer Längsachse eines selbstzentrierenden Schockdämpfers gemäß der Erfindung und
Fig. 5: einen Querschnitt senkrecht zur Längsachse eines selbstzentrierenden Schockdämpfers gemäß der Erfindung.

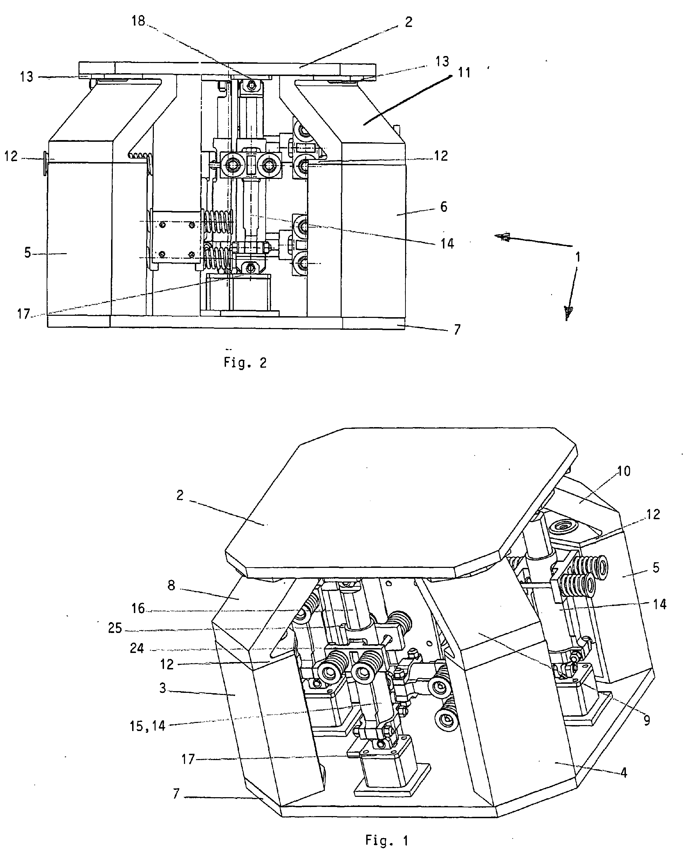

Fig. 1, 2: Eine Tragvorrichtung 1 weist eine im wesentlichen rechteckige Platte 2 auf, die mit jeweils vier vertikalen Stützen mit metallischen Sockeln 3, 4, 5, 6 auf einer Verankerung 7, z. B. einem Schiffsdeck, biegesteif montiert sind. Jeweils ein elastisches Element 8, 9, 10, 11 aus einem Elastomer mit Dämpfungseigenschaften bis zu 20% ist einerseits auf jedem der Sockel 3, 4, 5, 6 und andererseits an den vier Ecken der Platte 2 befestigt. Die elastischen Elemente 8, 9, 10, 11 zwischen Sockeln 3, 4, 5, 6 und Platte 2 weisen jeweils einen im wesentlichen Z-förmigen Querschnitt auf, von dem die jeweilige Außenfläche 12 jeweils mit den Sockeln 3, 4, 5, 6 und die im wesentlichen parallel gegenüberliegende Außenfläche 13 mit der Unterseite der Platte 2 verbunden ist.

Selbstzentrierende Schockdämpfer 14 sind parallel zu den vier Stützen geschaltet, indem sie mittel- oder unmittelbar über Winkelprofile einerseits an der Verankerung 7 und andererseits an der Platte 2 befestigt sind und in jede der Raumachsen x, y, z wirken. Je zwei in eine der Raumachsen x, y, z wirkende selbstzentrierende Schockdämpfer 14 sind im wesentlichen symmetrisch in der Tragvorrichtung 1 angeordnet und die zur Ebene der Platte 2 parallelen, selbstzentrierenden Schockdämpfer 14 sind im wesentlichen parallel zu den Seiten der Platte 2 ausgerichtet.

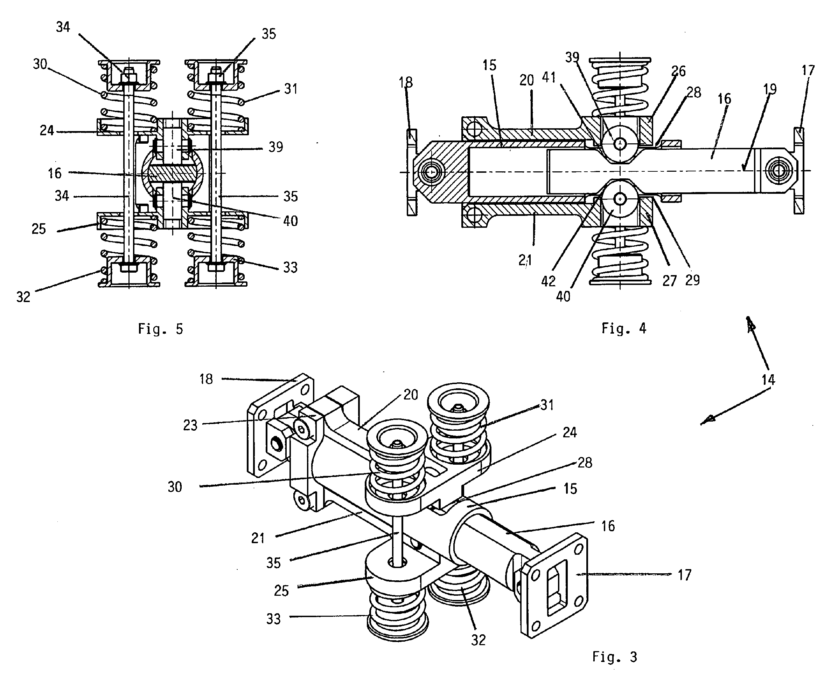

Fig. 3, 4, 5: Entsprechende Merkmale sind mit den Bezugszeichen aus Fig. 1, 2 bezeichnet. Ein selbstzentrierender Schockdämpfer 14 weist einen in einem Zylinder 15 koaxial verschieblich geführten Kolben 16 auf. Ein Flansch 17 ist an dem freien, axialen Ende des Kolbens 16 und ein Flansch 18 an dem freien, axialen Ende des Zylinders 15 gelenkig befestigt zur drehmomentfreien Verbindung mit der Platte 2, einer der Stützen oder der Verankerung 7 mittels Bolzen.

An Zylinder 15 liegen symmetrisch zu seiner Längsachse 19 beidseitig Stege 20, 21 an, die über Spannbügel 22, 23 am Umfang von Zylinder 15 schwenkbar zueinander verschraubt sind. An den Enden der Stege 20, 21, ungefähr in der Mitte des selbstzentrierenden Schockdämpfers 14, sind sich gegenüberliegende Zentriervorrichtungen 24, 25 vorgesehen. Die Zentriervorrichtungen 24, 25 greifen mit Führungshülsen 26, 27 von außen durch Ausnehmungen 28, 29 im Zylinder 15. Quer zur Längsachse 19 von Zylinder 15 sind an den Zentriervorrichtungen 24, 25 auf der einen Seite von Zylinder 15 paarweise gegenüberliegende Druckfederpaare 30, 31 und auf der anderen Seite von Zylinder 15 paarweise gegenüberliegende Druckfederpaare 32, 33 vorgesehen, die über zwei jeweils durch Bohrungen in den Zentriervorrichtungen 24, 25 geführte Zapfen 34, 35 die Zentriervorrichtungen 24, 25 zusammen drücken. Der Druck, mit dem die Zentriervorrichtungen 24, 25 gegen einander gedrückt werden, ist über auf die Druckfederpaare 30-33 wirkende Stellschrauben 34, 35 einstellbar.

In den Führungshülsen 26, 27 sind Rollen 39, 40 befestigt, die von den Zentriervorrichtungen 24, 25 mit den Druckfederpaaren 30-33 in sich gegenüberliegende Nuten 41, 42 von Kolben 16 eingedrückt werden. Die Oberflächen der Nuten 41, 42 sind gehärtet oder beschichtet gegen Abrieb durch die Rollen 39, 40.

Betrieb der Tragvorrichtung mit den selbstzentrierenden Schockdämpfern

Die Tragvorrichtung 1 sei z. B. auf einem Schiff montiert mit einer schweren Radarvorrichtung (nicht dargestellt) auf der Platte 2.

Bei Bewegungen des Schiffes z. B. durch normalen Seegang erlauben die elastischen Elemente 8, 9, 10, 11, dass sich die Platte 2 der Tragvorrichtung 1 um kleinere Beträge aus einer vorbestimmten Lage relativ zur Verankerung 7 bewegt. Bei solchen Bewegungen des Schiffes sorgt dann die zentrierende Wirkung der Schockdämpfer der Tragvorrichtung 1, dass sich die Platte 2 direkt in die vorbestimmte Lage zurück bewegt, weil jede Bewegung der Platte 2 aus der vorbestimmten Lage eine Verschiebung von Kolben 16 relativ zu Zylinder 15 der selbstzentrierenden Schockdämpfer bedingt, die nur möglich ist, wenn die Rollen 39, 40 aus den sich gegenüberliegenden Nuten 41, 42 von Kolben 16 gedrückt werden gegen den Widerstand der von den Druckfederpaaren 30-33 gegen einander gedrückten Zentriervorrichtungen 24, 25

Ist das Schiff einem schweren Schock ausgesetzt, wie er z. B. durch eine am Schiffsrumpf detonierende Mine verursacht sein kann, erlauben die elastischen Elemente 8, 9, 10, 11 zur Reduktion von Kräften und Momenten für den Erhalt unverformter Sockel 3, 4, 5, 6 in der Tragvorrichtung 1, dass sich die Platte 2 der Tragvorrichtung 1 auch um größere Beträge aus ihrer vorbestimmten Lage bewegen kann. Bei großen Bewegungen der Platte 2 aus ihrer vorbestimmten Lage werden die Rollen 39, 40 aus den sich gegenüberliegenden Nuten 41, 42 von Kolben 16 gedrückt und gleiten in Richtung der Längsachse 19 auf dem Umfang des Kolbens 16 bis die Auslenkung der Platte 2 von den elastischen Elementen 8, 9, 10, 11 gestoppt ist und die Platte 2 von den elastischen Elementen 8, 9, 10, 11 zurückgeführt wird bis die Rollen 39, 40 wieder zu den sich gegenüberliegenden Nuten 41, 42 von Kolben 16 zurück gelangen und mittels der von den Druckfederpaaren 30-33 gegen einander gedrückten Zentriervorrichtungen 24, 25 in die Nuten 41, 42 gedrückt werden. Je nach den Amplituden der Bewegungen der Platte 2 aus ihrer vorbestimmten Lage, der Gesamtmasse aus Platte 2 und Vorrichtung auf Platte 2 und den Dämpfungseigenschaften der elastischen Elemente 8, 9, 10, 11 können die Rollen 39, 40 um die sich gegenüberliegenden Nuten 41, 42 oszillieren bis die Rollen 39, 40 wieder von den Druckfederpaaren 30-33 in die sich gegenüberliegenden Nuten 41, 42 gedrückt werden, wenn die Platte 2 ihre vorbestimmte Lage wieder erreicht hat.

Mehrere in x-, y-, z-Richtung senkrecht zueinander positionierte, selbstzentrierende Schockdämpfer sind in der Tragvorrichtung 1 parallel zu den Stützen der Tragvorrichtung 1 geschaltet für optimierte Rückführung der Platte 2 in ihre Ausgangslage.

## Patentansprüche

1. Tragvorrichtung (1) mit mindestens einer Stütze aus einem elastischen Element (8, 9, 10, 11) mit Dämpfungseigenschaften und mindestens einem metallischen Sockel (3, 4, 5, 6) für eine nach einem von einer Verankerung (7) über die Stütze übertragenen Schock reversibel in ihre Ausgangslage rückführbaren Platte (2), wobei das mindestens eine elastische Element (8, 9, 10, 11) mit Dämpfungseigenschaften zwischen dem mindestens einen Sockel (3, 4, 5, 6) und der Platte (2) angeordnet ist und mindestens einem selbstzentrierenden Schockdämpfer, der parallel zu der mindestens einen Stütze geschaltet ist.

2. Tragvorrichtung (1) gemäß Anspruch 1, **dadurch gekennzeichnet, dass** die mindestens eine Stütze im wesentlichen vertikal und die Platte (2) im wesentlichen horizontal ausgerichtet sind.

3. Tragvorrichtung (1) gemäß Anspruch 1, **dadurch gekennzeichnet, dass** die Platte (2) im wesentlichen rechteckig und jeweils eine von vier Stützen an den Ecken der Platte (2) angeordnet ist.

4. Tragvorrichtung (1) gemäß Anspruch 1, **dadurch gekennzeichnet, dass** das mindestens eine elastische Element (8, 9, 10, 11) zwischen Stütze und Platte (2) einen im wesentlichen Z-förmigen Querschnitt hat und mit seinen sich parallel gegenüberliegenden
